# EUROPEAN PATENT SPECIFICATION

(11) **EP 4 475 487 B1**
(45) Date of publication and mention of the grant of the patent: **26.08.2026**
(21) Application number: 23765435.5
(22) Date of filing: 07.06.2023
(51) Int. Cl.: H04L 9/40, H04L 67/12, G06N 3/044, G06N 3/045, G06N 3/08, G06N 3/084, G06N 3/088

(54) **NETWORK INTRUSION DETECTION METHOD AND APPARATUS, AND ELECTRONIC DEVICE AND READABLE STORAGE MEDIUM**
VERFAHREN UND VORRICHTUNG ZUR ERKENNUNG VON NETZWERKEINDRINGUNGEN SOWIE ELEKTRONISCHE VORRICHTUNG UND LESBARES SPEICHERMEDIUM
PROCÉDÉ ET APPAREIL DE DÉTECTION D'INTRUSION DE RÉSEAU, DISPOSITIF ÉLECTRONIQUE ET SUPPORT DE STOCKAGE LISIBLE

(30) Priority: 27.04.2023 CN 202310466099
(43) Date of publication of application: 11.12.2024
(73) Proprietor: The 6th Research Institute of China Electronics Corporation, Beijing 102200 (CN)
(72) Inventor: SHEN, Zhiwei, Beijing 102200 (CN); SHI, Wenfeng, Beijing 102200 (CN); ZHU, Xiaoman, Beijing 102200 (CN)
(74) Representative: Manna, Sara
(86) International application number: PCT/CN2023/098966
(87) International publication number: WO 2024/221550

(56) References cited:
- WO-A1-2022/259125
- CN-A- 110 881 037
- CN-A- 111 885 084
- CN-A- 115 801 374
- CN-A- 116 192 536
- US-A1- 2018 115 568
- US-A1- 2021 185 086
- KUKKALA VIPIN KUMAR ET AL: "INDRA: Intrusion Detection Using Recurrent Autoencoders in Automotive Embedded Systems", IEEE TRANSACTIONS ON COMPUTER-AIDED DESIGN OF INTEGRATED CIRCUITS AND SYSTEMS, IEEE, USA, vol. 39, no. 11, 2 October 2020 (2020-10-02), pages 3698 - 3710, XP011818397, ISSN: 0278-0070, [retrieved on 20201028], DOI: 10.1109/TCAD.2020.3012749
- ABDEL-BASSET MOHAMED ET AL: "Deep-IFS: Intrusion Detection Approach for Industrial Internet of Things Traffic in Fog Environment", IEEE TRANSACTIONS ON INDUSTRIAL INFORMATICS, IEEE SERVICE CENTER, NEW YORK, NY, US, vol. 17, no. 11, 22 September 2020 (2020-09-22), pages 7704 - 7715, XP011868345, ISSN: 1551-3203, [retrieved on 20210729], DOI: 10.1109/TII.2020.3025755
- ZHANG WUMEI ET AL: "Intrusion Detection Model for Industrial Internet of Things Based on Improved Autoencoder", COMPUTATIONAL INTELLIGENCE AND NEUROSCIENCE, vol. 2022, 1 May 2022 (2022-05-01), US, pages 1 - 8, XP093296332, ISSN: 1687-5265, DOI: 10.1155/2022/1406214

## Description

### TECHNICAL FIELD

The present disclosure relates to a field of computer technologies, and particularly to a method and an apparatus for detecting network intrusion, an electronic device and a readable storage medium.

### BACKGROUND

A plurality of industrial devices are included in a conventional industrial network. These industrial devices are usually connected via physical network cables for networking and control between the devices. Since there are a large number of tangled network cables on the site, positions of the industrial devices are inconvenient to be adjusted, which affects a layout of the industrial devices in an industrial site, and further affects maintenance and expansion of the industrial devices in an industrial network.

The 5th generation (5G) network with a low latency, a high bandwidth and a massive connectivity, may achieve a rapid access of the conventional industrial device and satisfy requirements for a network latency and a number of access devices in an industrial scenario, so that networking and control between the industrial devices are achieved through the 5G network, which brings a great convenience to the industrial network.

However, an industrial network constructed by conventional wiring (i.e., a physical network cable connection) is an internal network of a factory, which belongs to a closed network. With the development of enterprise informatization, an enterprise IT network and an operational technology (OT) network are developing towards a fusion and integration direction. An industrial network constructed through the 5G network is often exposed to the internet, which makes the industrial device in the industrial network vulnerable to network intrusion.

WO2022259125A1 discloses a method for detecting cyber-attacks at edge servers. KUKKALA VIPIN KUMAR ET AL: "INDRA: Intrusion Detection Using Recurrent Autoencoders in Automotive Embedded Systems", IEEE TRANSACTIONS ON COMPUTER-AIDED DESIGN OF INTEGRATED CIRCUITS AND SYSTEMS, IEEE, USA, vol. 39, no. 11, 2 October 2020 (2020-10-02), pages 3698-3710, XP011818397 discloses a novel intrusion detection system (IDS) called INDRA that utilizes a gated recurrent unit (GRU)-based recurrent autoencoder to detect anomalies in controller area network (CAN) bus-based automotive embedded systems.

### SUMMARY

For this purpose, the present disclosure aims to provide a method and an apparatus for detecting network intrusion, an electronic device, a computer-readable storage medium, and a computer program product, to improve the security of an industrial device.

The invention is set out in the appended set of claims.

According to the method and the apparatus for detecting network intrusion, the electronic device, the computer-readable storage medium, the computer program product, and the computer program in the embodiments of the disclosure, a first network intrusion recognition result corresponding to the network traffic data is determined by performing a network intrusion behavior recognition on the network traffic data through the industrial network intrusion detection model, and a network intrusion type corresponding to the network intrusion behavior is also determined in response to there being the network intrusion behavior; and the network intrusion type and identity information of an intruded industrial device are sent to a target user terminal, so that an operation and maintenance personnel corresponding to the target user terminal blocks the network intrusion behavior. In the embodiments, the model of industrial network intrusion detection is used to recognize in time whether the industrial device is intruded by a network. When the industrial device is intruded by the network, the network intrusion behavior is blocked in time, thereby improving the security of the industrial device.

In order to make the above purposes, features and advantages of the present disclosure more obvious and understandable, preferred embodiments are given below and described in combination with accompanying drawings.

### BRIEF DESCRIPTION OF THE DRAWINGS

In order to explain the technical solutions in the embodiments of the present disclosure more clearly, the accompanying drawings in the embodiments will be briefly introduced below. It should be understood that the following accompanying drawings only illustrate certain embodiments of the present disclosure.
FIG. 1 illustrates a flowchart of a method for detecting network intrusion according to an embodiment of the present disclosure.
FIG. 2 illustrates a structural diagram illustrating a a model of industrial network intrusion detection according to an embodiment of the present disclosure.
FIG. 3 illustrates a structural diagram illustrating an apparatus for detecting network intrusion according to an embodiment of the present disclosure.
FIG. 4 illustrates a structural diagram illustrating an electronic device according to an embodiment of the present disclosure.

### DETAILED DESCRIPTION

In order to make the purpose, the technical solution and the advantage of embodiments of the disclosure more clear, the technical solution in the embodiments of the present disclosure will be described clearly and completely in combination with the accompanying drawings in the embodiments of the present disclosure. The embodiments described are only part of embodiments in the disclosure, rather than all the embodiments.

Components in the embodiments of the disclosure described and illustrated in the accompanying drawings may be arranged and designed in various different configurations. Therefore, the following detailed description of the embodiments of the disclosure according to the accompanying drawings is not intended to limit the claimed scope of the disclosure, but represents only selected embodiments of the disclosure.

In the related art, when network intrusion is detected, a detection rule for each network intrusion behavior needs to be understood in advance, and the network intrusion detection may be performed by using a pre-configured detection rule. When a certain network intrusion behavior never occurred, since there is no detection rule for such network intrusion behavior in advance, such intrusion behavior cannot be detected. Therefore, the existing method for detecting network intrusion has a low detection rate.

In consideration of the above problems, a method and an apparatus for detecting network intrusion, an electronic device, a computer-readable storage medium, and a computer program product, are provided in the embodiments of the disclosure, to improve the accuracy of network intrusion detection and the security of the industrial device. It will be described in the following embodiments.

### Embodiment 1:

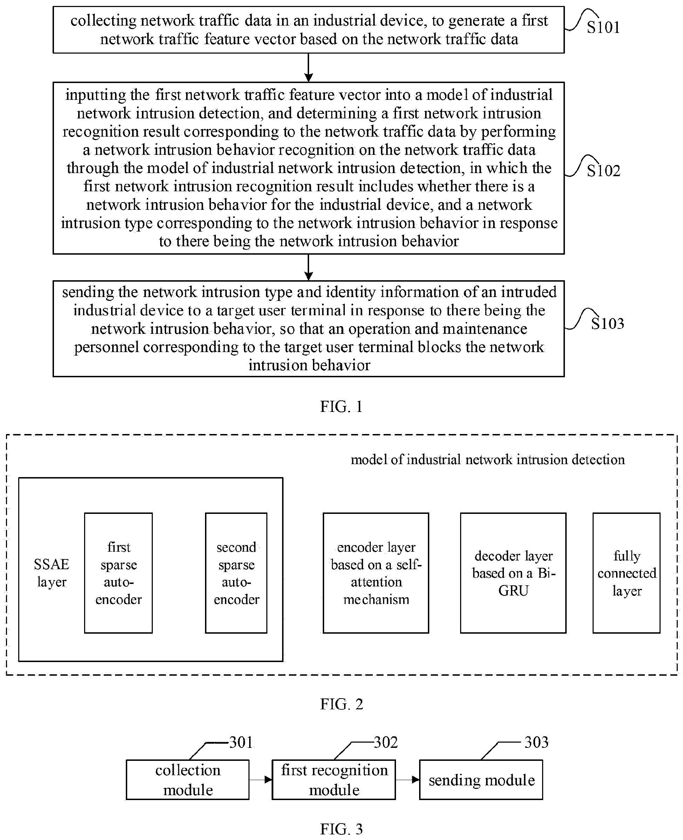

For convenience of understanding the embodiment, a method for detecting network intrusion disclosed in the embodiment of the present disclosure is described first. FIG. 1 illustrates a flowchart of a method for detecting network intrusion according to the embodiment of the present disclosure. As illustrated in FIG. 1, steps S101 to S103 are included.

At S101, network traffic data in an industrial device is collected, to generate a first network traffic feature vector based on the network traffic data.

In the embodiment, the method for detecting network intrusion is applied to a network intrusion detection device. Specifically, the network intrusion detection device may be a 5G multi-access edge computing (MEC) node. The network intrusion detection device may be configured near the industrial device in an industrial site, and a plurality of industrial devices are included in the industrial site.

When the step S101 is executed, for each of the industrial devices, the network intrusion detection device collects network traffic data in the industrial device at a current moment from the industrial device, to generate a first network traffic feature vector based on the network traffic data.

In a possible implementation, the network traffic data includes: access data to the industrial device, and/or command data sent to the industrial device.

In a possible implementation, when the first network traffic feature vector is generated based on the network traffic data, the step S101 may be specifically executed based on the following steps S1011 to S1012.

At S1011, standard network traffic data is generated by preprocessing the network traffic data. The preprocessing includes any one or more of: data cleaning, data numeralization and data standardization.

Specifically, the data cleaning may be deleting empty value data, and the empty value data refers to data including a large number of missing values.

Data types in the network traffic data include numeric data, categorical data, and character data. Since a model training and a model prediction may be performed on the numeric data, the categorical data and the character data in the network traffic data need to be numeralized.

For example, a loading instruction and an unloading instruction may be categorical data. By numeralizing the categorical data, the loading instruction may be represented by a value of 1, and the unloading instruction may be represented by a value of 2. For the character data represented by a string of characters, a preset conversion method (e.g., a numerical algorithm) may be used to perform a data numeralization processing on the character data.

Data standardization refers to data normalization. As an example, numerical ranges of various data in the network traffic data are different, such as a numerical range of some data is larger (0-10000) and a numerical range of some data is smaller (0-10). Thus, the numerical ranges of various data in the network traffic data are normalized into a same numerical range through data standardization.

In the embodiment, the network traffic data is converted into standard network traffic data after being preprocessed, that is, an input X of the model.

At S1012, a first network traffic feature vector is generated based on the standard network traffic data, by performing a word embedding operation on the standard network traffic data. Each piece of standard network traffic data corresponds to one first network traffic feature vector.

At S102, the first network traffic feature vector is input into a model of industrial network intrusion detection, and a first network intrusion recognition result corresponding to the network traffic data is determined by performing a network intrusion behavior recognition on the network traffic data through the model of industrial network intrusion detection. The first network intrusion recognition result includes whether there is a network intrusion behavior for the industrial device, and a network intrusion type corresponding to the network intrusion behavior in response to there being the network intrusion behavior.

In the embodiment, the network intrusion type includes one or more of: a denial of service attack (DoS), a probe monitoring and and other detection activities, a remote-to-local attack (R2L), and a user-to-root attack (U2R).

In a possible implementation, FIG. 2 illustrates a structural diagram illustrating a model of industrial network intrusion detection according to an embodiment of the present disclosure. As illustrated in FIG. 2, the model of industrial network intrusion detection includes a sparse stacked autoencoder (SSAE) layer, an encoder layer based on a self-attention mechanism, a decoder layer based on a bi-directional gated recurrent unit (Bi-GRU) and a fully connected layer.

When the step S102 is executed, it may be executed based on steps S1021 to S1024.

At S1021, the first network traffic feature vector is input into the SSAE layer, and a second network traffic feature vector is obtained by performing a dimension reduction processing on the first network traffic feature vector through the SSAE layer.

Since a large amount of data information is included in the network traffic data, a dimension of the first network traffic feature vector is relatively large. When a model prediction is performed by using a large-dimensional first network traffic feature vector, more model prediction time is needed. Therefore, in the embodiment, a dimension-reduced second network traffic feature vector is obtained by performing a dimension reduction processing on the dimension of the first network traffic feature vector through the SSAE layer to reduce the dimension of the first network traffic feature vector. The dimension of the first network traffic feature vector is higher than the dimension of the second network traffic feature vector. Thus, the time for model prediction is reduced.

In a possible implementation, as illustrated in FIG. 2, the SSAE layer includes a first sparse autoencoder and a second sparse auto-encoder. When the first network traffic feature vector is input into the SSAE layer, and the second network traffic feature vector is obtained by performing the dimension reduction processing on the first network traffic feature vector through the SSAE layer at S1021, specifically, the first network traffic feature vector may be input into the first sparse auto-encoder, and a dimension-reduced network traffic feature vector may be obtained by performing the dimension reduction processing on the first network traffic feature vector through the first sparse auto-encoder; and the dimension-reduced network traffic feature vector may be input into the second sparse autoencoder, and the second network traffic feature vector may be obtained by performing the dimension reduction processing on the dimension-reduced network traffic feature vector through the second sparse auto-encoder.

In the embodiment, a dimension reduction effect is desired by processing of the SSAE layer for many times.

A hidden layer of the SSAE is determined as an input of the self-attention mechanism.

At S1022, the second network traffic feature vector is input into the encoder layer based on the self-attention mechanism, and a third network traffic feature vector is obtained by calculating weight proportions between features in the second network traffic feature vector through the encoder layer based on the self-attention mechanism.

In the embodiment, the encoder layer based on the self-attention mechanism includes a position encoder. The position encoder is used to reflect a position relationship between the features and generate a position embedding (PE). The position embedding is added to the second network traffic feature vector, so that a distance relationship between the features in the second network traffic feature vector may be better represented in the next operations.

A calculation method of the position embedding is as follows: ${PE}_{\left(pos,2i\right)} = sin \left(pos/{10000}^{2 i / d}\right)$ ${PE}_{\left(pos,2i+1\right)} = cos \left(pos/{10000}^{2 i / d}\right)$ where pos represents a position of a feature in a set of inputs, d represents a dimension of PE (which is consistent with the dimension of the second network traffic feature vector), 2i represents a dimension of an even number, and 2i +1 represents a dimension of an odd number.

The second network traffic feature vector and the position embedding may be added together to obtain a new second network traffic feature vector, which is represented by U, and U is an input of the self-attention mechanism.

The encoder layer based on the self-attention mechanism calculates the weight proportions between the features in the new second network traffic feature vector by using a scaled dot-product manner, and learns an association relationship between different features, to obtain a third network traffic feature vector.

The calculation method is as follows: $\left\{\begin{matrix}Q = {W}_{q} ⋅ U \\ K = {W}_{k} ⋅ U \\ V = {W}_{v} ⋅ U\end{matrix}\right.$ $Attention \left(Q, K, V\right) = softmax \left(\frac{{QK}^{T}}{\sqrt{{d}_{k}}}\right) V$ where Q represents a query matrix obtained by multiplying a linear matrix transformation W_{q} by U, K represents a key value matrix obtained by multiplying a linear matrix transformation Wₖ by U, and V represents a value matrix obtained by multiplying a linear matrix transformation Wᵥ by U. An inner product of each row of vectors in the matrices Q and K is calculated, and in order to prevent the inner product from being too large, the inner product is divided by a square root of dₖ, so as to obtain a matrix that may represent an intensity of attention between the network traffics. An attention coefficient of each word relative to other words is calculated by using Softmax, and is then multiplied by V to obtain an output Attention(Q, K, V). The output value S of Attention(Q, K, V) is a third network traffic feature.

At S1023, the third network traffic feature vector is input into a decoder layer based on the Bi-GRU to decode the third traffic feature vector, and a fourth network traffic feature vector is output.

A decoder, by taking the Bi-GRU as a model, captures a time sequence dependence relationship. The encoder layer based on the self-attention mechanism compresses a sequence of the second network traffic feature vector into a third network traffic feature vector. The decoder layer based on the Bi-GRU decodes the third network traffic feature vector, mines a time association between the features, and restores it as a new sequence (i.e., a fourth network traffic feature vector).

Assuming that sₜ is an input, zt represents an update gate, rₜ represents a reset gate, hₜ is an output of a hidden layer, and h̃ₜ is a candidate hidden state at time t, a GRU gating update equation is: ${z}_{t} = σ \left({W}_{z}⋅\left[{h}_{t - 1}, {s}_{t}\right]+{b}_{z}\right)$ ${r}_{t} = σ \left({W}_{r}⋅\left[{h}_{t - 1}, {s}_{t}\right]+{b}_{r}\right)$ ${{h}^{˜}}_{t} = tan h \left(W⋅\left[{r}_{t}∗{h}_{t - 1},{s}_{t}\right]+{b}_{h}\right)$ ${h}_{t} = \left(1-{z}_{t}\right) ∗ {h}_{t - 1} + {z}_{t} ∗ {{h}^{˜}}_{t}$ where, W_{z}, Wᵣ and W are trainable parameter matrices, and b_{z}, bᵣ and bₕ are biases.

The uni-direction GRU state always outputs uni-direction propagation from front to back, may only extract forward information of a current state, but may not utilize subsequent sequence information. The Bi-direction GRU (BiGRU) enables a network to acquire information from both forward and backward propagations, to fully extract data-related features, and the outputs are jointly determined by states of the two GRUs: ${h}_{t} = {\vec{w} \vec{h}}_{t} + {w}^{←} {{h}_{t}}^{←}$

A last time value h_{_1} of hₜ is taken as a fourth network traffic feature vector.

At S 1024, the fourth network traffic feature vector is input into the fully-connected layer, and the first network intrusion recognition result yᵢ corresponding to the network traffic data is output.

An input dimension of the fully connected layer is a dimension of h_{_1}, and an output dimension is a categorical dimension of intrusion detection.

At S103, in response to there being the network intrusion behavior, the network intrusion type and identity information of an intruded industrial device are sent to a target user terminal, so that an operation and maintenance personnel corresponding to the target user terminal blocks the network intrusion behavior.

In a possible implementation, the model of industrial network intrusion detection is trained by a server, and the server includes the network intrusion detection device and other devices in addition to the network intrusion detection device. The server is further configured to deploy the trained model of industrial network intrusion detection to the network intrusion detection device. The model of industrial network intrusion detection is trained by the server in the following steps at S201-S205.

At S201, historical network traffic data in the industrial device and a network intrusion tag corresponding to the historical network traffic data are acquired; and the network intrusion tag includes whether there is a network intrusion behavior for the industrial device in the historical network traffic data, and a network intrusion type corresponding to the network intrusion behavior in response to there being the network intrusion behavior.

At S202, standard historical network traffic data is obtained by preprocessing the historical network traffic data, and a first historical network traffic feature vector is generated based on the standard historical network traffic data.

At S203, the first historical network traffic feature vector is input into an initial model of industrial network intrusion detection to be trained, and a second network intrusion recognition result corresponding to the historical network traffic data is predicted by performing a network intrusion behavior recognition on the historical network traffic data through the initial model of industrial network intrusion detection.

At S204, a loss value of the initial model of industrial network intrusion detection is calculated based on the second network intrusion recognition result and the network intrusion tag.

A model training is performed by taking a cross entropy function as a final loss function: $L = - \frac{1}{N} {\sum }_{i}^{N} {y}_{i} log {{y}_{ι}}^{˜} + \left(1-{y}_{i}\right) log \left(1-{{y}_{ι}}^{˜}\right)$ where, yᵢ represents a true value, ỹ₁ represents a predicted value, and N is a number of samples.

At S205, learnable parameters in the initial model of industrial network intrusion detection are updated by using the loss value, and training is stopped until a prediction accuracy of the initial model of industrial network intrusion detection is greater than a preset threshold value or the prediction accuracy is no longer increased, to obtain the trained model of industrial network intrusion detection.

### Embodiment 2:

FIG. 3 illustrates a structural diagram illustrating an apparatus for detecting network intrusion according to an embodiment of the present disclosure. As illustrated in FIG. 3, the apparatus includes a collection module 301, a first recognition module 302 and a sending module 303.

The collection module 301 is configured to collect network traffic data in an industrial device, to generate a first network traffic feature vector based on the network traffic data.

The first recognition module 302 is configured to input the first network traffic feature vector into a model of industrial network intrusion detection, and determine a first network intrusion recognition result corresponding to the network traffic data by performing a network intrusion behavior recognition on the network traffic data through the model of industrial network intrusion detection. The first network intrusion recognition result includes whether there is a network intrusion behavior for the industrial device, and a network intrusion type corresponding to the network intrusion behavior in response to there being the network intrusion behavior.

The sending module 303 is configured to send the network intrusion type and identity information of an intruded industrial device to a target user terminal, in response to there being the network intrusion behavior, so that an operation and maintenance personnel corresponding to the target user terminal blocks the network intrusion behavior.

Optionally, when the collection module 301 is configured to collect network traffic data in the industrial device, to generate the first network traffic feature vector based on the network traffic data, the collection module is specifically configured to:
generate standard network traffic data by preprocessing the network traffic data, in which the preprocessing includes any one or more of: data cleaning, data numeralization and data standardization; and generate the first network traffic feature vector based on the standard network traffic data.

Optionally, the model of industrial network intrusion detection includes a sparse stacked autoencoder (SSAE) layer, an encoder layer based on a self-attention mechanism, a decoder layer based on a bi-directional gated recurrent unit (Bi-GRU) and a fully connected layer; and when the first recognition module 302 is configured to input the first network traffic feature vector into the model of industrial network intrusion detection, and determine the first network intrusion recognition result corresponding to the network traffic data by performing the network intrusion behavior recognition on the network traffic data through the model of industrial network intrusion detection, the first recognition module is specifically configured to:
input the first network traffic feature vector into the SSAE layer, and obtain a second network traffic feature vector by performing a dimension reduction processing on the first network traffic feature vector through the SSAE layer; input the second network traffic feature vector into the encoder layer based on the self-attention mechanism, and obtain a third network traffic feature vector by calculating weight proportions between features in the second network traffic feature vector through the encoder layer based on the self-attention mechanism; input the third network traffic feature vector into the decoder layer based on the Bi-GRU to decode the third traffic feature vector, and output a fourth network traffic feature vector; and input the fourth network traffic feature vector into the fully-connected layer, and output the first network intrusion recognition result corresponding to the network traffic data.

Optionally, the SSAE layer includes a first sparse auto-encoder and a second sparse auto-encoder; when the first recognition module 302 is configured to input the first network traffic feature vector into the SSAE layer and obtain the second network traffic feature vector by performing the dimension reduction processing on the first network traffic feature vector through the SSAE layer, the first recognition module is specifically configured to:
input the first network traffic feature vector into the first sparse auto-encoder, and obtain a dimension-reduced network traffic feature vector by performing the dimension reduction processing on the first network traffic feature vector through the first sparse auto-encoder; and input the dimension-reduced network traffic feature vector into the second sparse auto-encoder, and obtain the second network traffic feature vector by performing the dimension reduction processing on the dimension-reduced network traffic feature vector through the second sparse auto-encoder.

Optionally, the apparatus is applied to a network intrusion detection device; the model of industrial network intrusion detection is trained by a server, and the server includes the network intrusion detection device and other devices in addition to the network intrusion detection device. The server includes: an acquiring module, a preprocessing module, a second recognition module, a calculation module, a training module and a deployment module.

The acquiring module is configured to acquire historical network traffic data in the industrial device and a network intrusion tag corresponding to the historical network traffic data. The network intrusion tag includes whether there is a network intrusion behavior for the industrial device in the historical network traffic data, and a network intrusion type corresponding to the network intrusion behavior in response to there being the network intrusion behavior.

The preprocessing module is configured to obtain standard historical network traffic data by preprocessing the historical network traffic data, and generate a first historical network traffic feature vector based on the standard historical network traffic data.

The second recognition module is configured to input the first historical network traffic feature vector into an initial model of industrial network intrusion detection to be trained, and predict a second network intrusion recognition result corresponding to the historical network traffic data by performing a network intrusion behavior recognition on the historical network traffic data through the initial model of industrial network intrusion detection.

The calculation module is configured to calculate a loss value of the initial model of industrial network intrusion detection based on the second network intrusion recognition result and the network intrusion tag.

The training module is configured to update learnable parameters in the initial model of industrial network intrusion detection by using the loss value, and stop training until a prediction accuracy of the initial model of industrial network intrusion detection is greater than a preset threshold value or the prediction accuracy is no longer increased, to obtain the trained model of industrial network intrusion detection.

The delpoyment module is configured to deploy the trained model of industrial network intrusion detection to the network intrusion detection device.

Optionally, the network traffic data includes: access data to the industrial device, and/or command data sent to the industrial device.

### Embodiment 3:

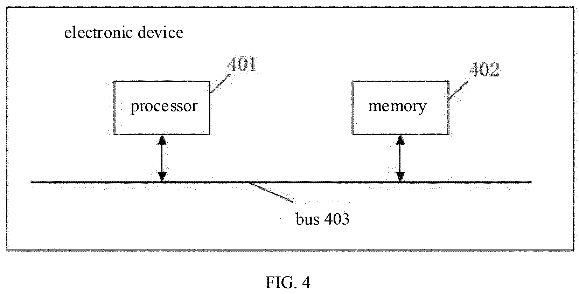

FIG. 4 illustrates a structural diagram illustrating an electronic device according to an embodiment of the present disclosure, which includes a processor 401, a memory 402 stored with machine-readable instructions executable by the processor 401, and a bus 403. When the electronic device is running, the processor 401 communicates with the memory 402 via the bus 403, and when the machine-readable instructions are executed by the processor, the method according to the Embodiment 1 is carried out.

### Embodiment 4:

A computer-readable storage medium having a computer program stored thereon is provided in the Embodiment 4 of the present disclosure. When the computer program is executed by the processor, the above method as described in the Embodiment 1 is carried out.

### Embodiment 5:

A computer program product including a computer program is further provided in the Embodiment 5 of the present disclosure. When the computer program is executed by a processor, the method in any possible implementation of the Embodiment 1 is carried out.

### Embodiment 6:

A computer program including computer program codes is further provided in the Embodiment 6 of the present disclosure. When the computer program codes are running on a computer, the computer is caused to perform the method in any possible implementation of the Embodiment 1.

Those skilled in the art may clearly understand that, for the convenience and conciseness of the description, a specific work process of the apparatus, the electronic device and the computer-readable storage medium described above may refer to a corresponding process in the above method embodiments, which will not be repeated here.

In several embodiments according to the present disclosure, it should be understood that the disclosed apparatus and the method may be implemented in other ways. The above-described apparatus embodiments are merely exemplary. For example, division of modules is only a logical function division and there may be additional division manners in an actual implementation. For example, a plurality of modules or components may be combined or may be integrated into another system, or some features may be omitted, or not performed. In addition, the coupling or direct coupling or communication connection of each other shown or discussed may be an indirect coupling or communication connection via some communication interfaces, devices, or units, which may be electrical, mechanical or in other forms.

The above units described as separate parts may or may not be physically separated, the parts shown as units may or may not be physical units, which may be located in one place, or may be distributed to a plurality of network units. Some or all units may be selected according to the actual needs to achieve the purpose of the present disclosure.

In addition, functional units in the embodiments of the present disclosure may be integrated in a processing unit, or may be physically existed separately, or two or more units may be integrated in one unit.

The above functions may be stored in a non-volatile computer-readable storage medium executable by a processor if they are implemented in the form of a software function unit and sold/used as an independent product. On the basis of such an understanding, the technical solution of the present disclosure essentially or a part of the technical soltion contributing to the related art, or a part of the technical solution may be embodied in the form of a software product. The computer software product is stored in a storage medium including several instructions so that a computer device (which may be a personal computer, a server or a network device, etc.) is caused to perform all or part of steps of the method according to various embodiments of the present disclosure. The forgoing storage medium includes a USB disk, a mobile hard disk, a read-only memory (ROM), a random access memory (RAM), a magnetic disk or an optical disk and other media that may store program codes.

It should be noted that, the above embodiments are only detailed implementations of the disclosure, and configured to describe the technical solution of the present disclosure rather than a limitation, and the protection scope of the disclosure is not limited here. The protection scope of the present disclosure shall be subject to the protection scope of claims.

## Claims

1. A method for detecting network intrusion, performed by a network intrusion detection device, the method comprising:
collecting (S101) network traffic data in an industrial device, to generate a first network traffic feature vector based on the network traffic data; and
inputting (S102) the first network traffic feature vector into a target model of industrial network intrusion detection, and determining a first recognition result corresponding to the network traffic data by performing a network intrusion behavior recognition on the network traffic data through the target model, wherein the first recognition result comprises whether there is a network intrusion behavior for the industrial device in the network traffic data, and a network intrusion type corresponding to the network intrusion behavior; and
in response to there being the network intrusion behavior, sending (S103) the network intrusion type and identity information of an intruded industrial device to a target user terminal, so that an operation and maintenance personnel corresponding to the target user terminal blocks the network intrusion behavior;
wherein the network intrusion type comprises one or more of: a denial of service attack, a probe monitoring, a remote-to-local attack, or a user-to-root attack;
the target model comprises a sparse stacked auto-encoder, SSAE, layer, an encoder layer based on a self-attention mechanism, a decoder layer based on a bi-directional gated recurrent unit, Bi-GRU, and a fully connected layer;
inputting the first network traffic feature vector into the target model, and determining the first recognition result corresponding to the network traffic data comprises:
inputting the first network traffic feature vector into the SSAE layer, and obtaining a second network traffic feature vector by performing a dimension reduction processing on the first network traffic feature vector through the SSAE layer;
inputting the second network traffic feature vector into the encoder layer based on the self-attention mechanism, and obtaining a third network traffic feature vector by calculating weight proportions between features in the second network traffic feature vector in a scaled dot-product manner through the encoder layer based on the self-attention mechanism;
inputting the third network traffic feature vector into the decoder layer based on the Bi-GRU to decode the third traffic feature vector, and outputting a fourth network traffic feature vector; and
inputting the fourth network traffic feature vector into the fully-connected layer, and outputting the first recognition result corresponding to the network traffic data.

2. The method according to claim 1, wherein generating the first network traffic feature vector based on the network traffic data comprises:
generating standard network traffic data by preprocessing the network traffic data, wherein the preprocessing comprises any one or more of: data cleaning, data numeralization and data standardization; and
generating the first network traffic feature vector based on the standard network traffic data.

3. The method according to claim 1, wherein the SSAE layer comprises a first sparse auto-encoder and a second sparse auto-encoder; and inputting the first network traffic feature vector into the SSAE layer and obtaining the second network traffic feature vector by performing the dimension reduction processing on the first network traffic feature vector through the SSAE layer comprises:
inputting the first network traffic feature vector into the first sparse auto-encoder, and obtaining a dimension-reduced network traffic feature vector by performing the dimension reduction processing on the first network traffic feature vector through the first sparse auto-encoder; and
inputting the dimension-reduced network traffic feature vector into the second sparse autoencoder, and obtaining the second network traffic feature vector by performing the dimension reduction processing on the dimension-reduced network traffic feature vector through the second sparse auto-encoder.

4. The method according to any one of claims 2 to 3, wherein the target model is trained by a server, and the server comprises the network intrusion detection device and other devices in addition to the network intrusion detection device; and the server is further configured to deploy the target model after training to the network intrusion detection device; and
the target model is trained by the server in ways of:
acquiring historical network traffic data in the industrial device and a network intrusion tag corresponding to the historical network traffic data, wherein the network intrusion tag comprises whether there is a network intrusion behavior for the industrial device in the historical network traffic data, and a network intrusion type corresponding to the network intrusion behavior;
obtaining standard historical network traffic data by preprocessing the historical network traffic data, and generating a first historical network traffic feature vector based on the standard historical network traffic data;
inputting the first historical network traffic feature vector into an initial model of industrial network intrusion detection to be trained, and predicting a second recognition result corresponding to the historical network traffic data by performing a network intrusion behavior recognition on the historical network traffic data through the initial model;
calculating a loss value of the initial model based on the second recognition result and the network intrusion tag; and
updating parameters in the initial model based on the loss value, and stopping training until a prediction accuracy of the initial model is greater than a preset threshold value or the prediction accuracy is no longer increased, to obtain the target model.

5. The method according to any one of claims 1 to 4, wherein the network traffic data comprises:
access data to the industrial device, and/or command data sent to the industrial device.

6. An apparatus for detecting network intrusion, applied to a network intrusion detection device, the apparatus comprising:
a collection module (301), configured to collect network traffic data in an industrial device, to generate a first network traffic feature vector based on the network traffic data; and
a first recognition module (302), configured to input the first network traffic feature vector into a target model of industrial network intrusion detection, and determine a first recognition result corresponding to the network traffic data by performing a network intrusion behavior recognition on the network traffic data through the target model, wherein the first recognition result comprises whether there is a network intrusion behavior for the industrial device in the network traffic data, and a network intrusion type corresponding to the network intrusion behavior; and
a sending module (303), configured to send the network intrusion type and identity information of an intruded industrial device to a target user terminal in response to there being the network intrusion behavior, so that an operation and maintenance personnel corresponding to the target user terminal blocks the network intrusion behavior;
wherein the network intrusion type comprises one or more of: a denial of service attack, a probe monitoring, a remote-to-local attack, or a user-to-root attack;
the target model comprises a sparse stacked auto-encoder, SSAE, layer, an encoder layer based on a self-attention mechanism, a decoder layer based on a bi-directional gated recurrent unit, Bi-GRU, and a fully connected layer;
the first recognition module is further configured to:
input the first network traffic feature vector into the SSAE layer, and obtain a second network traffic feature vector by performing a dimension reduction processing on the first network traffic feature vector through the SSAE layer;
input the second network traffic feature vector into the encoder layer based on the self-attention mechanism, and obtain a third network traffic feature vector by calculating weight proportions between features in the second network traffic feature vector in a scaled dot-product manner through the encoder layer based on the self-attention mechanism;
input the third network traffic feature vector into the decoder layer based on the Bi-GRU to decode the third traffic feature vector, and output a fourth network traffic feature vector; and
input the fourth network traffic feature vector into the fully-connected layer, and output the first recognition result corresponding to the network traffic data.

7. The apparatus according to claim 6, wherein the collection module is further configured to:
generate standard network traffic data by preprocessing the network traffic data, wherein the preprocessing comprises any one or more of: data cleaning, data numeralization and data standardization; and
generate the first network traffic feature vector based on the standard network traffic data.

8. The apparatus according to claim 6, wherein the SSAE layer comprises a first sparse autoencoder and a second sparse auto-encoder; and
the first recognition module is further configured to:
input the first network traffic feature vector into the first sparse auto-encoder, and obtain a dimension-reduced network traffic feature vector by performing the dimension reduction processing on the first network traffic feature vector through the first sparse auto-encoder; and
input the dimension-reduced network traffic feature vector into the second sparse autoencoder, and obtain the second network traffic feature vector by performing the dimension reduction processing on the dimension-reduced network traffic feature vector through the second sparse auto-encoder.

9. The apparatus according to any one of claims 7 to 8, wherein the target model is trained by a server comprising the network intrusion detection device and other devices in addition to the network intrusion detection device, and the server is further configured to deploy the target model after training to the network intrusion detection device; and
the target model is trained by the server in ways of:
acquiring historical network traffic data in the industrial device and a network intrusion tag corresponding to the historical network traffic data, wherein the network intrusion tag comprises whether there is a network intrusion behavior for the industrial device in the historical network traffic data, and a network intrusion type corresponding to the network intrusion behavior;
obtaining standard historical network traffic data by preprocessing the historical network traffic data, and generating a first historical network traffic feature vector based on the standard historical network traffic data;
inputting the first historical network traffic feature vector into an initial model of industrial network intrusion detection to be trained, and predicting a second recognition result corresponding to the historical network traffic data by performing a network intrusion behavior recognition on the historical network traffic data through the initial model;
calculating a loss value of the initial model based on the second recognition result and the network intrusion tag; and
updating parameters in the initial model based on the loss value, and stopping training until a prediction accuracy of the initial model is greater than a preset threshold value or the prediction accuracy is no longer increased, to obtain the target model.

10. The apparatus according to any one of claims 6 to 9, wherein the network traffic data comprises: access data to the industrial device, and/or command data sent to the industrial device.

11. A computer-readable storage medium with a computer program stored thereon, wherein when the computer program is executed by a processor, all the steps of the method of any one of claims 1 to 5 are carried out.

12. A computer program product comprising a computer program, wherein when the computer program is executed by a processor, the method of any one of claims 1 to 5 is carried out.

## Patentansprüche

1. Verfahren zur Erkennung von Angriffen auf Netzwerke, durchgeführt von einer Vorrichtung zur Erkennung von Angriffen auf Netzwerke, wobei das Verfahren Folgendes umfasst:
Erfassen (S101) von Netzwerkverkehrsdaten in einer industriellen Vorrichtung, um basierend auf den Netzwerkverkehrsdaten einen ersten Netzwerkverkehrsmerkmalsvektor zu erzeugen; und
Eingeben (S102) des ersten Netzwerkverkehrsmerkmalsvektors in ein Zielmodell zur Erkennung von Angriffen auf ein industrielles Netzwerk und Bestimmen eines ersten Erkennungsergebnisses, das den Netzwerkverkehrsdaten entspricht, durch Durchführen einer Erkennung von Verhalten als Angriff auf ein Netzwerk anhand der Netzwerkverkehrsdaten durch das Zielmodell, wobei das erste Erkennungsergebnis umfasst, ob ein Verhalten als Angriff auf ein Netzwerk für die industrielle Vorrichtung in den Netzwerkverkehrsdaten vorliegt, und einen Typ eines Angriffs auf ein Netzwerk, der dem Verhalten als Angriff auf ein Netzwerk entspricht; und
als Reaktion auf das Vorliegen eines Verhalten als Angriff auf ein Netzwerk, Senden (S103) des Typs eines Angriffs auf ein Netzwerk und von Identitätsinformationen einer angegriffenen industriellen Vorrichtung an ein Ziel-Benutzerendgerät, sodass ein dem Ziel-Benutzerendgerät entsprechendes Betriebs- und Wartungspersonal das Verhalten als Angriff auf ein Netzwerk blockiert;
wobei der Typ eines Angriffs auf ein Netzwerk eines oder mehrere umfasst von: einem Denial-of-Service-Angriff, einem Probe-Monitoring, einem Remote-to-Local-Angriff oder einem User-to-Root-Angriff;
das Zielmodell eine Sparse-Stacked-Autoencoder-Schicht (SSAE-Schicht), eine Codiererschicht basierend auf einem Selbstaufmerksamkeitsmechanismus, eine Decodiererschicht basierend auf einer bidirektionalen Gated-Recurrent-Einheit (Bi-GRU) und eine vollständig verbundene Schicht umfasst;
Eingeben des ersten Netzwerkverkehrsmerkmalsvektors in das Zielmodell und Bestimmen des ersten Erkennungsergebnisses, das den Netzwerkverkehrsdaten entspricht, umfasst:
Eingeben des ersten Netzwerkverkehrsmerkmalsvektors in die SSAE-Schicht und Erhalten eines zweiten Netzwerkverkehrsmerkmalsvektors durch Durchführen einer Dimensionsreduktionsverarbeitung an dem ersten Netzwerkverkehrsmerkmalsvektor durch die SSAE-Schicht;
Eingeben des zweiten Netzwerkverkehrmerkmalsvektors in die auf dem Selbstaufmerksamkeitsmechanismus basierende Codiererschicht und Erhalten eines dritten Netzwerkverkehrmerkmalsvektors durch Berechnen von Gewichtsanteilen zwischen Merkmalen in dem zweiten Netzwerkverkehrmerkmalsvektor in der Art eines skalierten Skalarprodukts durch die auf dem Selbstaufmerksamkeitsmechanismus basierende Codiererschicht;
Eingeben des dritten Netzwerkverkehrsmerkmalsvektors in die Decodiererschicht basierend auf der Bi-GRU, um den dritten Verkehrsmerkmalsvektor zu decodieren, und Ausgeben eines vierten Netzwerkverkehrsmerkmalsvektors; und
Eingeben des vierten Netzwerkverkehrsmerkmalsvektors in die vollständig verbundene Schicht und Ausgeben des ersten Erkennungsergebnisses entsprechend den Netzwerkverkehrsdaten.

2. Verfahren nach Anspruch 1, wobei das Erzeugen des ersten Netzwerkverkehrsmerkmalsvektors basierend auf den Netzwerkverkehrsdaten umfasst:
Erzeugen von Standardnetzwerkverkehrsdaten durch Vorverarbeiten der Netzwerkverkehrsdaten, wobei die Vorverarbeitung eines oder mehrere umfasst von: Datenbereinigung, Datennumerisierung und Datenstandardisierung; und
Erzeugen des ersten Netzwerkverkehrsmerkmalsvektors basierend auf den Standardnetzwerkverkehrsdaten.

3. Verfahren nach Anspruch 1, wobei die SSAE-Schicht einen ersten Sparse-Autoencoder und einen zweiten Sparse-Autoencoder umfasst; und Eingeben des ersten Netzwerkverkehrsmerkmalsvektors in die SSAE-Schicht und Erhalten des zweiten Netzwerkverkehrsmerkmalsvektors durch Durchführen der Dimensionsreduktionsverarbeitung an dem ersten Netzwerkverkehrsmerkmalsvektor durch die SSAE-Schicht umfasst:
Eingeben des ersten Netzwerkverkehrsmerkmalsvektors in den ersten Sparse-Autoencoder und Erhalten eines dimensionsreduzierten Netzwerkverkehrsmerkmalsvektors durch Durchführen der Dimensionsreduktionsverarbeitung an dem ersten Netzwerkverkehrsmerkmalsvektor durch den ersten Sparse-Autoencoder; und
Eingeben des dimensionsreduzierten Netzwerkverkehrmerkmalsvektors in den zweiten Sparse-Autoencoder und Erhalten des zweiten Netzwerkverkehrmerkmalsvektors durch Durchführen der Dimensionsreduktionsverarbeitung an dem dimensionsreduzierten Netzwerkverkehrmerkmalsvektor durch den zweiten Sparse-Autoencoder.

4. Verfahren nach einem der Ansprüche 2 bis 3, wobei das Zielmodell durch einen Server trainiert wird und der Server die Vorrichtung zur Erkennung von Angriffen auf ein Netzwerk und zusätzlich zu der Vorrichtung zur Erkennung von Angriffen auf ein Netzwerk andere Vorrichtungen umfasst; und der Server ferner konfiguriert ist, um das Zielmodell nach dem Training auf die Vorrichtung zur Erkennung von Angriffen auf ein Netzwerk anzuwenden; und
das Zielmodell durch den Server auf folgende Weisen trainiert wird:
Erlangen historischer Netzwerkverkehrsdaten in der industriellen Vorrichtung und eines Tags für einen Angriff auf ein Netzwerk, das den historischen Netzwerkverkehrsdaten entspricht, wobei das Tag für einen Angriff auf ein Netzwerk umfasst, ob ein Verhalten als Angriff auf ein Netzwerk für die industrielle Vorrichtung in den historischen Netzwerkverkehrsdaten vorliegt, und einen Typ eines Angriffs auf ein Netzwerk, der dem Verhalten als Angriff auf ein Netzwerk entspricht;
Erhalten von historischen Standardnetzwerkverkehrsdaten durch Vorverarbeiten der historischen Netzwerkverkehrsdaten, und Erzeugen eines ersten historischen Netzwerkverkehrsmerkmalsvektors basierend auf den historischen Standardnetzwerkverkehrsdaten;
Eingeben des ersten historischen Netzwerkverkehrsmerkmalsvektors in ein zu trainierendes Anfangsmodell zur Erkennung von Angriffen auf ein industrielles Netzwerk und Vorhersagen eines zweiten Erkennungsergebnisses, das den historischen Netzwerkverkehrsdaten entspricht, durch Durchführen einer Erkennung von Verhalten als Angriff auf ein Netzwerk anhand der historischen Netzwerkverkehrsdaten durch das Anfangsmodell;
Berechnen eines Verlustwerts des Anfangsmodells basierend auf dem zweiten Erkennungsergebnis und dem Tag für einen Angriff auf ein Netzwerk; und
Aktualisieren von Parametern in dem Anfangsmodell basierend auf dem Verlustwert und Stoppen des Trainings, bis eine Vorhersagegenauigkeit des Anfangsmodells größer als ein voreingestellter Grenzwert ist oder die Vorhersagegenauigkeit nicht mehr erhöht wird, um das Zielmodell zu erhalten.

5. Verfahren nach einem der Ansprüche 1 bis 4, wobei die Netzwerkverkehrsdaten umfassen:
Daten für den Zugriff auf die industrielle Vorrichtung und/oder an die industrielle Vorrichtung gesendete Befehlsdaten.

6. Einrichtung zur Erkennung von Angriffen auf ein Netzwerk, angewendet auf eine Vorrichtung zur Erkennung von Angriffen auf ein Netzwerk, wobei die Einrichtung umfasst:
ein Erfassungsmodul (301), das konfiguriert ist, um Netzwerkverkehrsdaten in einer industriellen Vorrichtung zu erfassen, um basierend auf den Netzwerkverkehrsdaten einen ersten Netzwerkverkehrsmerkmalsvektor zu erzeugen; und
ein erstes Erkennungsmodul (302), das konfiguriert ist, um den ersten Netzwerkverkehrsmerkmalsvektor in ein Zielmodell zur Erkennung von Angriffen auf ein industrielles Netzwerk einzugeben und ein erstes Erkennungsergebnis zu bestimmen, das den Netzwerkverkehrsdaten entspricht, indem eine Erkennung von Verhalten als Angriff auf ein Netzwerk anhand der Netzwerkverkehrsdaten durch das Zielmodell durchgeführt wird, wobei das erste Erkennungsergebnis umfasst, ob ein Verhalten als Angriff auf ein Netzwerk für die industrielle Vorrichtung in den Netzwerkverkehrsdaten vorliegt, und einen Typ eines Angriffs auf ein Netzwerk, der dem Verhalten als Angriff auf ein Netzwerk entspricht; und
ein Sendemodul (303), das konfiguriert ist, um als Reaktion auf das Vorliegen eines Verhaltens als Angriff auf ein Netzwerk den Typ des Angriffs auf ein Netzwerk und Identitätsinformationen einer industriellen Vorrichtung, die angegriffen wurde, an ein Ziel-Benutzerendgerät zu senden, sodass ein dem Ziel-Benutzerendgerät entsprechendes Betriebs- und Wartungspersonal das Verhalten als Angriff auf ein Netzwerk blockiert;
wobei der Typ eines Angriffs auf ein Netzwerk eines oder mehrere umfasst von: einem Denial-of-Service-Angriff, einem Probe-Monitoring, einem Remote-to-Local-Angriff oder einem User-to-Root-Angriff;
das Zielmodell eine Sparse-Stacked-Autoencoder-Schicht (SSAE-Schicht), eine Codiererschicht basierend auf einem Selbstaufmerksamkeitsmechanismus, eine Decodiererschicht basierend auf einer bidirektionalen Gated-Recurrent-Einheit (Bi-GRU) und eine vollständig verbundene Schicht umfasst;
das erste Erkennungsmodul ferner konfiguriert ist zum:
Eingeben des ersten Netzwerkverkehrsmerkmalsvektors in die SSAE-Schicht, und Erhalten eines zweiten Netzwerkverkehrsmerkmalsvektors durch Durchführen einer Dimensionsreduktionsverarbeitung an dem ersten Netzwerkverkehrsmerkmalsvektor durch die SSAE-Schicht;
Eingeben des zweiten Netzwerkverkehrsmerkmalsvektors in die auf dem Selbstaufmerksamkeitsmechanismus basierende Codiererschicht, und Erhalten eines dritten Netzwerkverkehrsmerkmalsvektors durch Berechnen von Gewichtsproportionen zwischen Merkmalen in dem zweiten Netzwerkverkehrsmerkmalsvektor in der Art eines skalierten Skalarprodukts durch die auf dem Selbstaufmerksamkeitsmechanismus basierende Codiererschicht;
Eingeben des dritten Netzwerkverkehrsmerkmalsvektors in die auf der BiGRU basierende Decodiererschicht, um den dritten Verkehrsmerkmalsvektor zu decodieren, und Ausgeben eines vierten Netzwerkverkehrsmerkmalsvektors; und
Eingeben des vierten Netzwerkverkehrsmerkmalsvektors in die vollständig verbundene Schicht und Ausgeben des ersten Erkennungsergebnisses, das den Netzwerkverkehrsdaten entspricht.

7. Einrichtung nach Anspruch 6, wobei das Erfassungsmodul ferner konfiguriert ist zum:
Erzeugen von Standardnetzwerkverkehrsdaten durch Vorverarbeiten der Netzwerkverkehrsdaten, wobei die Vorverarbeitung eines oder mehrere der Folgenden umfasst: Datenbereinigung, Datennumerisierung und Datenstandardisierung; und
Erzeugen des ersten Netzwerkverkehrsmerkmalsvektors basierend auf den Standardnetzwerkverkehrsdaten.

8. Einrichtung nach Anspruch 6, wobei die SSAE-Schicht einen ersten Sparse-Autoencoder und einen zweiten Sparse-Autoencoder umfasst; und
das erste Erkennungsmodul ferner konfiguriert ist zum:
Eingeben des ersten Netzwerkverkehrsmerkmalsvektors in den ersten Sparse-Autoencoder und Erhalten eines dimensionsreduzierten Netzwerkverkehrsmerkmalsvektors durch Durchführen der Dimensionsreduktionsverarbeitung an dem ersten Netzwerkverkehrsmerkmalsvektor durch den ersten Sparse-Autoencoder; und
Eingeben des dimensionsreduzierten Netzwerkverkehrsmerkmalsvektors in den zweiten Sparse-Autoencoder und Erhalten des zweiten Netzwerkverkehrsmerkmalsvektors durch Durchführen der Dimensionsreduktionsverarbeitung an dem dimensionsreduzierten Netzwerkverkehrsmerkmalsvektor durch den zweiten Sparse-Autoencoder.

9. Einrichtung nach einem der Ansprüche 7 bis 8, wobei das Zielmodell durch einen Server trainiert wird, der die Vorrichtung zur Erkennung von Angriffen auf ein Netzwerk und zusätzlich zu der Vorrichtung zur Erkennung von Angriffen auf ein Netzwerk andere Vorrichtungen umfasst, und der Server ferner konfiguriert ist, um das Zielmodell nach dem Training auf die Vorrichtung zur Erkennung von Angriffen auf ein Netzwerk anzuwenden; und
das Zielmodell durch den Server auf folgende Weisen trainiert wird:
Erlangen historischer Netzwerkverkehrsdaten in der industriellen Vorrichtung und eines Tags für einen Angriff auf ein Netzwerk, das den historischen Netzwerkverkehrsdaten entspricht, wobei das Tag für einen Angriff auf ein Netzwerk umfasst, ob ein Verhalten als Angriff auf ein Netzwerk für die industrielle Vorrichtung in den historischen Netzwerkverkehrsdaten vorliegt, und einen Typ eines Angriffs auf ein Netzwerk, der dem Verhalten als Angriff auf ein Netzwerk entspricht;
Erhalten von historischen Standardnetzwerkverkehrsdaten durch Vorverarbeiten der historischen Netzwerkverkehrsdaten, und Erzeugen eines ersten historischen Netzwerkverkehrsmerkmalsvektors basierend auf den historischen Standardnetzwerkverkehrsdaten;
Eingeben des ersten historischen Netzwerkverkehrsmerkmalsvektors in ein zu trainierendes Anfangsmodell zur Erkennung von Angriffen auf ein industrielles Netzwerk und Vorhersagen eines zweiten Erkennungsergebnisses, das den historischen Netzwerkverkehrsdaten entspricht, durch Durchführen einer Erkennung von Verhalten als Angriff auf ein Netzwerk anhand der historischen Netzwerkverkehrsdaten durch das Anfangsmodell;
Berechnen eines Verlustwerts des Anfangsmodells basierend auf dem zweiten Erkennungsergebnis und dem Tag für einen Angriff auf ein Netzwerk; und
Aktualisieren von Parametern in dem Anfangsmodell basierend auf dem Verlustwert und Stoppen des Trainings, bis eine Vorhersagegenauigkeit des Anfangsmodells größer als ein voreingestellter Grenzwert ist oder die Vorhersagegenauigkeit nicht mehr erhöht wird, um das Zielmodell zu erhalten.

10. Einrichtung nach einem der Ansprüche 6 bis 9, wobei die Netzwerkverkehrsdaten umfassen: Daten für den Zugriff auf die industrielle Vorrichtung und/oder an die industrielle Vorrichtung gesendete Befehlsdaten.

11. Computerlesbares Speichermedium mit einem darauf gespeicherten Computerprogramm, wobei, wenn das Computerprogramm von einem Prozessor ausgeführt wird, alle Schritte des Verfahrens nach einem der Ansprüche 1 bis 5 ausgeführt werden.

12. Computerprogrammprodukt, umfassend ein Computerprogramm, wobei, wenn das Computerprogramm von einem Prozessor ausgeführt wird, das Verfahren nach einem der Ansprüche 1 bis 5 ausgeführt wird.

## Revendications

1. Procédé permettant de détecter une intrusion de réseau, réalisé par un dispositif de détection d'intrusion de réseau, le procédé comprenant :
la collecte (S101) de données de trafic réseau dans un dispositif industriel, pour générer un premier vecteur de caractéristiques de trafic réseau sur la base des données de trafic réseau ; et
la saisie (S102) du premier vecteur de caractéristiques de trafic réseau dans un modèle cible de détection d'intrusion de réseau industriel, et la détermination d'un premier résultat de reconnaissance correspondant aux données de trafic réseau en réalisant une reconnaissance de comportement d'intrusion de réseau sur le trafic réseau données par le biais du modèle cible, dans lequel le premier résultat de reconnaissance indique s'il existe un comportement d'intrusion de réseau pour le dispositif industriel dans les données de trafic réseau, et un type d'intrusion de réseau correspondant au comportement d'intrusion de réseau ; et
en réponse à l'existence du comportement d'intrusion de réseau, l'envoi (S103) du type d'intrusion de réseau et d'informations d'identité d'un dispositif industriel intrusé à un terminal utilisateur cible, de sorte qu'un personnel d'exploitation et de maintenance correspondant au terminal utilisateur cible bloque le comportement d'intrusion de réseau ;
dans lequel le type d'intrusion de réseau comprend un ou plusieurs parmi : une attaque par déni de service, une surveillance de sonde, une attaque distante vers locale ou une attaque utilisateur-racine ;
le modèle cible comprend une couche d'auto-encodeur empilée éparse, SSAE, une couche d'encodeur basée sur un mécanisme d'auto-attention, une couche de décodeur basée sur une unité récurrente à grille bidirectionnelle, Bi-GRU, et une couche entièrement connectée ;
la saisie du premier vecteur de caractéristiques de trafic réseau dans le modèle cible, et la détermination du premier résultat de reconnaissance correspondant aux données de trafic réseau comprend :
la saisie du premier vecteur de caractéristiques de trafic réseau dans la couche SSAE, et l'obtention d'un deuxième vecteur de caractéristiques de trafic réseau en réalisant un traitement de réduction de dimension sur le premier vecteur de caractéristiques de trafic réseau par le biais de la couche SSAE ;
la saisie du deuxième vecteur de caractéristiques de trafic réseau dans la couche d'encodeur basée sur le mécanisme d'auto-attention, et l'obtention d'un troisième vecteur de caractéristiques de trafic réseau en calculant des proportions de pondération entre des caractéristiques dans le deuxième vecteur de caractéristiques de trafic réseau de manière à produit scalaire pondéré par le biais de la couche d'encodeur basée sur le mécanisme d'auto-attention ;
la saisie du troisième vecteur de caractéristiques de trafic réseau dans la couche de décodeur basée sur la Bi-GRU pour décoder le troisième vecteur de caractéristiques de trafic, et la production d'un quatrième vecteur de caractéristiques de trafic réseau ; et
la saisie du quatrième vecteur de caractéristiques de trafic réseau dans la couche entièrement connectée, et la production du premier résultat de reconnaissance correspondant aux données de trafic réseau.

2. Procédé selon la revendication 1, dans lequel la génération du premier vecteur de caractéristiques de trafic réseau sur la base des données de trafic réseau comprend :
la génération de données de trafic réseau standard en prétraitant les données de trafic réseau, dans lequel le prétraitement comprend l'un quelconque ou plusieurs parmi : un nettoyage de données, une représentation numérique de données et une normalisation de données ; et
la génération du premier vecteur de caractéristiques de trafic réseau sur la base des données de trafic réseau standard.

3. Procédé selon la revendication 1, dans lequel la couche SSAE comprend un premier auto-encodeur épars et un second auto-encodeur épars ; et la saisie du premier vecteur de caractéristiques de trafic réseau dans la couche SSAE et l'obtention du deuxième vecteur de caractéristiques de trafic réseau en réalisant le traitement de réduction de dimension sur le premier vecteur de caractéristiques de trafic réseau par le biais de la couche SSAE comprend :
la saisie du premier vecteur de caractéristiques de trafic réseau dans le premier auto-encodeur épars, et l'obtention d'un vecteur de caractéristiques de trafic réseau à dimension réduite en réalisant le traitement de réduction de dimension sur le premier vecteur de caractéristiques de trafic réseau par le biais du premier auto-encodeur épars ; et
la saisie du vecteur de caractéristiques de trafic réseau à dimension réduite dans le second auto-encodeur épars, et l'obtention du deuxième vecteur de caractéristiques de trafic réseau en réalisant le traitement de réduction de dimension sur le vecteur de caractéristiques de trafic réseau à dimension réduite par le biais du second auto-encodeur épars.

4. Procédé selon l'une quelconque des revendications 2 à 3, dans lequel le modèle cible est entraîné par un serveur, et le serveur comprend le dispositif de détection d'intrusion de réseau et d'autres dispositifs en plus du dispositif de détection d'intrusion de réseau ; et le serveur est en outre configuré pour déployer le modèle cible après entraînement sur le dispositif de détection d'intrusion de réseau ; et
le modèle cible est entraîné par le serveur de manière à :
acquérir des données de trafic réseau historiques dans le dispositif industriel et d'une étiquette d'intrusion de réseau correspondant aux données de trafic réseau historiques, dans lequel l'étiquette d'intrusion de réseau indique s'il existe un comportement d'intrusion de réseau pour le dispositif industriel dans les données de trafic réseau historiques, et un type d'intrusion de réseau correspondant au comportement d'intrusion de réseau ;
obtenir des données de trafic réseau historiques standard en prétraitant les données de trafic réseau historiques, et générer un premier vecteur de caractéristiques de trafic réseau historique sur la base des données de trafic réseau historiques standard ;
saisir le premier vecteur de caractéristiques de trafic réseau historique dans un modèle initial de détection d'intrusion de réseau industriel à entraîner, et prédire un second résultat de reconnaissance correspondant aux données de trafic réseau historiques en réalisant une reconnaissance de comportement d'intrusion de réseau sur les données de trafic réseau historiques par le biais du modèle initial ;
calculer une valeur de perte du modèle initial sur la base du second résultat de reconnaissance et de l'étiquette d'intrusion de réseau ; et
mettre à jour des paramètres dans le modèle initial sur la base de la valeur de perte, et arrêter un entraînement jusqu'à ce qu'une précision de prédiction du modèle initial soit supérieure à une valeur seuil prédéfinie ou que la précision de prédiction ne soit plus augmentée, pour obtenir le modèle cible.

5. Procédé selon l'une quelconque des revendications 1 à 4, dans lequel les données de trafic réseau comprennent :
des données d'accès au dispositif industriel, et/ou des données d'instructions envoyées au dispositif industriel.

6. Appareil permettant de détecter une intrusion de réseau, appliqué à un dispositif de détection d'intrusion de réseau, l'appareil comprenant :
un module de collecte (301), configuré pour collecter des données de trafic réseau dans un dispositif industriel, afin de générer un premier vecteur de caractéristiques de trafic réseau sur la base des données de trafic réseau ; et
un premier module de reconnaissance (302), configuré pour saisir le premier vecteur de caractéristiques de trafic réseau dans un modèle cible de détection d'intrusion de réseau industriel, et déterminer un premier résultat de reconnaissance correspondant aux données de trafic réseau en réalisant une reconnaissance de comportement d'intrusion de réseau sur le trafic réseau données par le biais du modèle cible, dans lequel le premier résultat de reconnaissance indique s'il existe un comportement d'intrusion de réseau pour le dispositif industriel dans les données de trafic réseau, et un type d'intrusion de réseau correspondant au comportement d'intrusion de réseau ; et
un module d'envoi (303), configuré pour envoyer le type d'intrusion de réseau et des informations d'identité d'un dispositif industriel intrusé à un terminal utilisateur cible en réponse à l'existence d'un comportement d'intrusion de réseau, de sorte qu'un personnel d'exploitation et de maintenance correspondant au terminal utilisateur cible bloque le comportement d'intrusion de réseau ;
dans lequel le type d'intrusion de réseau comprend un ou plusieurs parmi : une attaque par déni de service, une surveillance de sonde, une attaque distante vers locale ou une attaque utilisateur-racine ;
le modèle cible comprend une couche d'auto-encodeur empilée éparse, SSAE, une couche d'encodeur basée sur un mécanisme d'auto-attention, une couche de décodeur basée sur une unité récurrente à grille bidirectionnelle, Bi-GRU, et une couche entièrement connectée ;
le premier module de reconnaissance est en outre configuré pour :
saisir le premier vecteur de caractéristiques de trafic réseau dans la couche SSAE, et obtenir un deuxième vecteur de caractéristiques de trafic réseau en réalisant un traitement de réduction de dimension sur le premier vecteur de caractéristiques de trafic réseau par le biais de la couche SSAE ;
saisir le deuxième vecteur de caractéristiques de trafic réseau dans la couche d'encodeur basée sur le mécanisme d'auto-attention, et obtenir un troisième vecteur de caractéristiques de trafic réseau en calculant des proportions de pondération entre des caractéristiques dans le deuxième vecteur de caractéristiques de trafic réseau de manière à produit scalaire pondéré par le biais de la couche d'encodeur basée sur le mécanisme d'auto-attention ;
saisir le troisième vecteur de caractéristiques de trafic réseau dans la couche de décodeur basée sur la Bi-GRU pour décoder le troisième vecteur de caractéristiques de trafic, et produire un quatrième vecteur de caractéristiques de trafic réseau ; et
saisir le quatrième vecteur de caractéristiques de trafic réseau dans la couche entièrement connectée, et produire le premier résultat de reconnaissance correspondant aux données de trafic réseau.

7. Appareil selon la revendication 6, dans lequel le module de collecte est en outre configuré pour :
générer des données de trafic réseau standard en prétraitant les données de trafic réseau, dans lequel le prétraitement comprend l'un quelconque ou plusieurs parmi : un nettoyage des données, une représentation numérique de données et une normalisation de données ; et
générer le premier vecteur de caractéristiques de trafic réseau sur la base des données de trafic réseau standard.

8. Appareil selon la revendication 6, dans lequel la couche SSAE comprend un premier auto-encodeur épars et un second auto-encodeur épars ; et
le premier module de reconnaissance est en outre configuré pour :
saisir le premier vecteur de caractéristiques de trafic réseau dans le premier auto-encodeur épars, et obtenir un vecteur de caractéristiques de trafic réseau à dimension réduite en mettant en réalisant le traitement de réduction de dimension sur le premier vecteur de caractéristiques de trafic réseau par le biais du premier auto-encodeur épars ; et
saisir le vecteur de caractéristiques de trafic réseau à dimension réduite dans le second auto-encodeur épars, et obtenir le deuxième vecteur de caractéristiques de trafic réseau en réalisant le traitement de réduction de dimension sur le vecteur de caractéristiques de trafic réseau à dimension réduite par le biais du second auto-encodeur épars.

9. Appareil selon l'une quelconque des revendications 7 à 8, dans lequel le modèle cible est entraîné par un serveur comprenant le dispositif de détection d'intrusion de réseau et d'autres dispositifs en plus du dispositif de détection d'intrusion de réseau, et le serveur est en outre configuré pour déployer le modèle cible après entraînement sur le dispositif de détection d'intrusion de réseau ; et
le modèle cible est entraîné par le serveur de manière à :
acquérir des données de trafic réseau historiques dans le dispositif industriel et d'une étiquette d'intrusion de réseau correspondant aux données de trafic réseau historiques, dans lequel l'étiquette d'intrusion de réseau indique s'il existe un comportement d'intrusion de réseau pour le dispositif industriel dans les données de trafic réseau historiques, et un type d'intrusion de réseau correspondant au comportement d'intrusion de réseau ;
obtenir des données de trafic réseau historiques standard en prétraitant les données de trafic réseau historiques, et générer un premier vecteur de caractéristiques de trafic réseau historique sur la base des données de trafic réseau historiques standard ;
saisir le premier vecteur de caractéristiques de trafic réseau historique dans un modèle initial de détection d'intrusion de réseau industriel à entraîner, et prédire un second résultat de reconnaissance correspondant aux données de trafic réseau historiques en réalisant une reconnaissance de comportement d'intrusion de réseau sur les données de trafic réseau historiques par le biais du modèle initial ;
calculer une valeur de perte du modèle initial sur la base du second résultat de reconnaissance et de l'étiquette d'intrusion de réseau ; et
mettre à jour des paramètres dans le modèle initial sur la base de la valeur de perte, et arrêter un entraînement jusqu'à ce qu'une précision de prédiction du modèle initial soit supérieure à une valeur seuil prédéfinie ou que la précision de prédiction ne soit plus augmentée, pour obtenir le modèle cible.

10. Appareil selon l'une quelconque des revendications 6 à 9, dans lequel les données de trafic réseau comprennent : des données d'accès au dispositif industriel, et/ou des données d'instructions envoyées au dispositif industriel.

11. Support de stockage lisible par ordinateur sur lequel est stocké un programme informatique, dans lequel, lorsque le programme informatique est exécuté par un processeur, toutes les étapes du procédé selon l'une quelconque des revendications 1 à 5 sont effectuées.

12. Produit-programme d'ordinateur comprenant un programme informatique, dans lequel, lorsque le programme informatique est exécuté par un processeur, le procédé selon l'une quelconque des revendications 1 à 5 est effectué.
